# EUROPEAN PATENT SPECIFICATION

(11) **EP 2 493 747 B1**
(45) Date of publication and mention of the grant of the patent: **05.03.2014**
(21) Application number: 10760437.3
(22) Date of filing: 13.09.2010
(51) Int. Cl.: B62D 21/09, B62D 21/16, B62D 21/20

(54) **A SUPPORT FRAME FOR A TRAILER**
STÜTZRAHMEN FÜR EINEN ANHÄNGER
CHÂSSIS DE SUPPORT POUR REMORQUE

(30) Priority: 28.10.2009 ZA 200907586
(43) Date of publication of application: 05.09.2012
(73) Proprietor: Tube Trailer Proprietary Limited, Stellenbosch 7600 (ZA)
(72) Inventor: PRINS, Floors Dawid, 7600 Western Cape (ZA)
(74) Representative: Gille Hrabal
(86) International application number: PCT/IB2010/054112
(87) International publication number: WO 2011/051828

(56) References cited:
- EP-A1- 0 584 016
- WO-A1-2009/155250
- BE-A3- 1 006 204
- DE-U1-202007 001 455

## Description

### FIELD OF INVENTION

This invention relates to a support frame for a vehicle. More particularly, this invention relates to a support frame for a trailer.

EP-A 0 584 016 and BE-A 1 006 204 each disclose a support frame for a vehicle including a single load bearing support member having an elongate hollow tubular structure in which a flowable substance can be stowed, the support member being operatively generally horizontally disposed in relation to a support surface for supporting a load to be conveyed; and mounting means for mounting the support member to a suspension frame assembly of the vehicle.

### SUMMARY OF THE INVENTION

According to the invention there is provided a support frame for a vehicle comprising the features of claim 1. Advantageous embodiments are subject-matter of the dependent claims.

The support surface may preferably comprise a flat deck of the type used for supporting a load to be conveyed.

### BRIEF DESCRIPTION OF THE DRAWINGS

Further features of the invention are described hereinafter by way of a non-limiting example of the invention, with reference to and as illustrated in the accompanying diagrammatic drawings. In the drawings:
Figure 1 shows a cross-sectional side view of a trailer assembly including the support frame according to the invention;

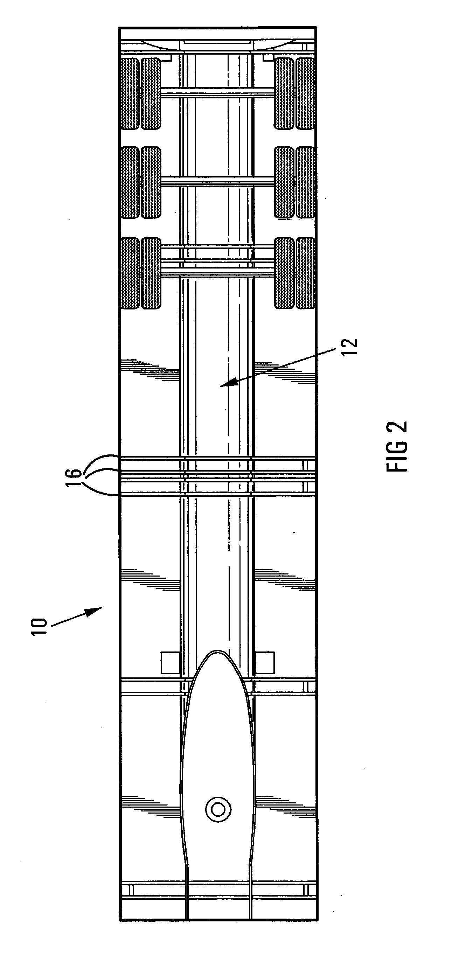

Figure 2 is a bottom view showing the support frame of Figure 1;
Figure 3 is an isometric bottom view showing the support frame of Figure 1; and

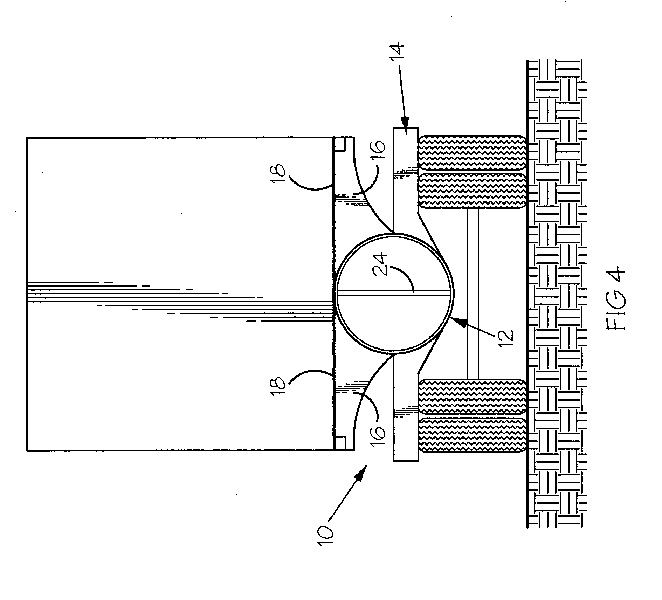

Figure 4 is an end view of the trailer assembly, showing the support frame of Figure 1 and, in particular, illustrating an internal, generally vertically oriented reinforcing plate member.

### DETAILED DESCRIPTION OF THE DRAWINGS

With reference to the drawings, a support frame for a vehicle, generally a trailer is indicated generally by the reference numeral 10. It is envisaged by the inventor that the support frame of the invention will find application to a trailer vehicle of the type generally referred to as a flatbed semi-trailer which are used to transport loads, such as shipping containers and the like and which are towed by road tractors or trucks. Traditional semi-trailers include a chassis including a load bearing support frame or girder having an I-beam cross-sectional profile which is mounted upon the vehicle's suspension assembly. The flatbed support surface rests upon the support frame. It is the inventor's view that the support frame will be applicable to many different types of load-bearing transport vehicles in addition to flat-bed semi-trailers.

The support frame of the invention is intended to replace the traditional I-beam support girder and includes an elongate, generally horizontally disposed hollow tube structure 12. The tube structure is preferably manufactured from a high strength structural steel and is mounted upon the trailer's suspension assembly 14 such that the tube extends in a parallel fashion in relation to the suspension assembly. The inventor envisages that the tube structure may also be manufactured from other suitable types of materials such as carbon fibre or other polymer substance. The support frame is centrally mounted upon the suspension assembly in order to ensure that any weight supported by it is evenly distributed.

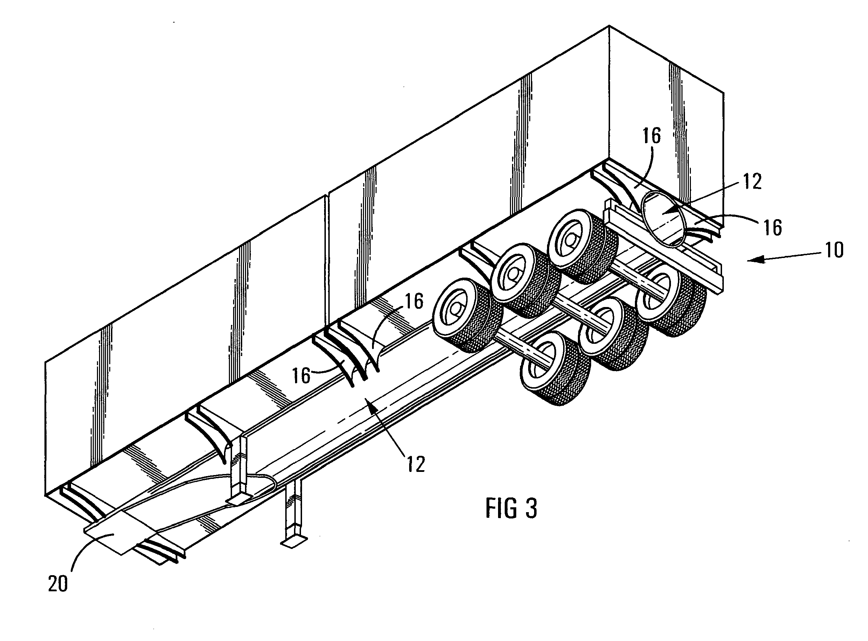

The support frame includes a plurality of supporting formations which 16 are securely mounted to the body of the tube structure along the length thereof. Each supporting formation defines an arcuate brace formation for mounting around the generally top portion of the support frame and wherein the brace formation defines a generally planar surface 18 an operatively upper end thereof for supporting a flatbed or the like. There may be a plurality of spaced-apart supporting formations along the length of the tube structure depending on the load-bearing requirements of the vehicle. A significant feature of the supporting formations is that they generally bend around and are thus supported by the tube structure. The planar support surface extends laterally on either side of the tube structure thereby ensuring that the load will be distributed evenly across the support frame. As shown in Figure 3 of the drawings, the tube structure may taper towards an operatively front end thereof to define a mounting formation 20 for mounting the trailer to the truck or other vehicle.

The hollow tube structure of the support frame defines one or more stowage compartments 22 which may be used to stow transportable, preferably flowable goods such as diesel, petrol and the like. In this manner, the support frame serves a dual purpose as a load bearing structure and as a stowage facility. It is envisaged by the inventor that the tube structure will have capacity to hold approximately 6000 L (Litres) of fluid. Furthermore, the hollow support frame is substantially lighter than the conventional I-beam frame. It is the inventor's view that the tare weight of a trailer including the support frame of the invention would be in the region of 3 600 Kgs (Kilograms) compared to the general tare weight of a conventional trailer of approximately 6 200Kgs (Kilograms). It is further envisaged by the inventor that the lower weight of the trailer incorporating the support frame of the invention would result in a number of advantages including less wear and tear on the vehicle's tyres, better fuel consumption, mitigation of road damage and would likely result in the vehicle being able to transport a higher payload.

The hollow tube of the support frame preferably includes an internal, longitudinally extending reinforcing plate member 24 extending along its length which dissects the tube into two halves. The reinforcing plate is preferably welded to the inside of the tube and simultaneously serves the function of a reinforcing member against bending of the tube as a well as a baffle plate for controlling the flow of fluids contained within the tube.

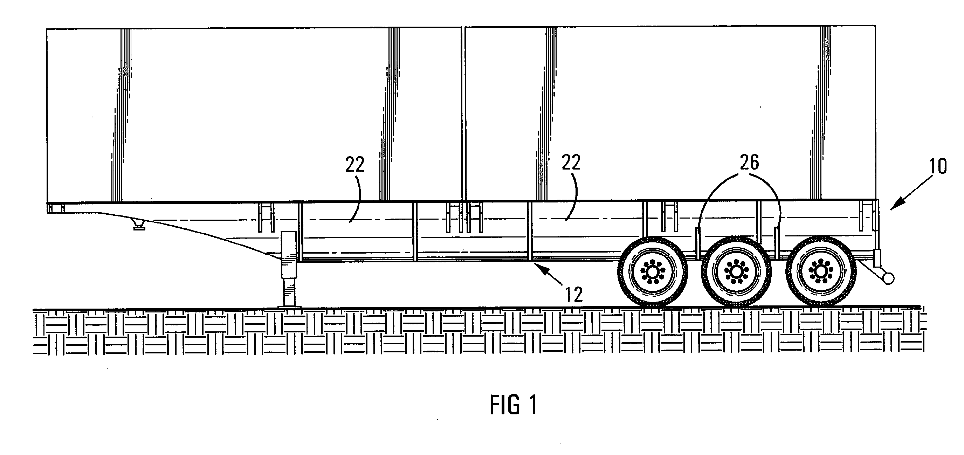

Further in accordance with the invention, the hollow tube is preferably segmented, as shown in Figure 1, to define a number of separate stowage compartments suitable for stowing different types of loads, for example diesel and petrol, simultaneously. In addition to the reinforcing plate member 24, the tube may include a number of transversely extending baffle plates 26 along its length to facilitate the control of flowable substances in transit. It is envisaged that the number and configuration of the baffle plates within the tube may vary in accordance with requirements without departing from the scope of the invention.

It will be understood that the invention provides for a support frame for a vehicle that has wide application potential depending on requirements. Also, numerous variations may be made to the embodiment of the invention described above without departing from the scope hereof.

## Claims

1. A support frame (10) for a vehicle, the support frame including:
a single load bearing support member (12) having an elongate hollow tubular structure defining a stowage compartment (22) for stowing a flowable substance, the support member being operatively generally horizontally disposed in relation to a support surface for supporting a load to be conveyed; and
mounting means for mounting the support member to a suspension frame assembly (14) of the vehicle,
**characterized in that**
the support member includes one or more internal, transversely disposed baffle plate members (26) for controlling the flow of a flowable substance stowed within the support member.

2. A support frame for a vehicle as claimed in claim 1, wherein the vehicle comprises a semi-trailer of the type used to transport a load.

3. A support frame for a vehicle as claimed in any one of claims 1 and 2, wherein the hollow support member is manufactured from steel.

4. A support frame for a vehicle as claimed in any one of the preceding claims, wherein the support frame includes a plurality of support formations (16) for supporting the support surface on the support member.

5. A support frame for a vehicle as claimed in claim 4, wherein each supporting formation defines a generally arcuate surface for engaging an external surface of the support member and a generally planar surface (18) at an operatively upper end thereof for supporting the support surface.

6. A support frame for a vehicle as claimed in any one of the preceding claims, wherein the hollow support member is internally segmented to define a plurality of separate stowage compartments for stowing one or more flowable substances.

7. A support frame for a vehicle as claimed in any one of the preceding claims, wherein the support member includes internal reinforcing means disposed between operatively upper and lower internal surfaces thereof for enhancing the structural strength of the support member, in use.

8. A support frame for a vehicle as claimed in claim 7, wherein the reinforcing means comprises a longitudinally disposed plate member (24) extending along the length of the support member.

9. A support frame for a vehicle as claimed in any one of the preceding claims, wherein the support member is tapered at and end thereof to define a mounting formation (20) for mounting the support frame to a towing vehicle.

10. A support frame as claimed in any one of the preceding claims, wherein the support surface comprises a flat deck of the type of used for supporting a load to be conveyed.

## Patentansprüche

1. Stützrahmen (10) für ein Fahrzeug, wobei der Stützrahmen aufweist:
ein einzelnes lasttragendes Stützelement (12) mit einer länglichen, hohlen, röhrenförmigen Struktur, welche einen Laderaum (22) zum Beladen mit einer fließfähigen Substanz definiert, wobei das Stützelement operativ allgemein horizontal bezüglich einer Stützfläche zum Tragen einer zu befördernden Ladung angeordnet ist; und
Montagevorrichtungen zum Befestigen des Stützelementes an einer gefederten Rahmenanordnung (14) des Fahrzeugs,
**dadurch gekennzeichnet, dass**
das Stützelement ein oder mehrere innere, quer angeordnete Prallblechelemente (26) zum Kontrollieren des Flusses einer fließfähigen Substanz, die innerhalb des Stützelementes gelagert ist, aufweist.

2. Stützrahmen für ein Fahrzeug gemäß Anspruch 1, wobei das Fahrzeug einen Sattelanhänger der Art aufweist, die zum Transport einer Ladung benutzt wird.

3. Stützrahmen für ein Fahrzeug gemäß irgendeinem der Ansprüche 1 und 2, wobei das hohle Stützelement aus Stahl hergestellt ist.

4. Stützrahmen für ein Fahrzeug gemäß irgendeinem der vorherigen Ansprüche, wobei der Stützrahmen eine Vielzahl von Stützanordnungen (16) zum Tragen der Stützfläche auf dem Stützelement aufweist.

5. Stützrahmen für ein Fahrzeug gemäß Anspruch 4, wobei jede Stützanordnung eine allgemein bogenförmige Fläche zum Eingreifen mit einer Außenfläche des Stützelementes und eine allgemein ebene Fläche (18) an ihrem einen operativ oberen Ende zum Tragen der Stützfläche definiert.

6. Stützrahmen für ein Fahrzeug gemäß irgendeinem der vorherigen Ansprüche, wobei das hohle Stützelement im Inneren segmentiert ist, um eine Vielzahl von getrennten Laderäumen zum Beladen mit einer oder mehreren fließfähigen Substanzen zu definieren.

7. Stützrahmen für ein Fahrzeug gemäß irgendeinem der vorherigen Ansprüche, wobei das Stützelement eine innere Verstärkungsvorrichtung aufweist, welche zwischen seiner operativ oberen und unteren Innenfläche angeordnet ist, um die strukturelle Festigkeit des Stützelementes im Gebrauch zu verbessern.

8. Stützrahmen für ein Fahrzeug gemäß Anspruch 7, wobei die Verstärkungsvorrichtung ein in Längsrichtung angeordnetes Plattenelement (24) aufweist, das sich entlang der Länge des Stützelementes erstreckt.

9. Stützrahmen für ein Fahrzeug gemäß irgendeinem der vorherigen Ansprüche, wobei das Stützelement sich an seinem einen Ende verjüngt, um eine Befestigungsanordnung (20) zum Anbringen des Stützrahmens an einem Zugfahrzeug zu definieren.

10. Stützrahmen gemäß irgendeinem der vorherigen Ansprüche, wobei die Stützfläche ein flaches Deck der Art aufweist, wie es zum Tragen einer zu transportierenden Ladung verwendet wird.

## Revendications

1. Châssis de support (10) d'un véhicule, le châssis de support comportant :
un seul membre de support (12) portant des charges et ayant une structure tubulaire creuse qui définit un compartiment de chargement (22) pour le charger d'une substance fluide, le membre de support étant en général disposé horizontalement en service par rapport à une surface de support pour porter une charge à transporter ; et
des moyens de montage pour monter le membre de support sur un ensemble de châssis à suspensions (14) du véhicule,
**caractérisé en ce que**
le membre de support comprend un ou plusieurs éléments déflecteurs (26) intérieurs et disposés transversalement pour contrôler le flux d'une substance fluide stockée à l'intérieur du membre de support.

2. Châssis de support d'un véhicule selon la revendication 1, dans lequel le véhicule comprend une semi-remorque du type utilisé pour le transport des charges.

3. Châssis de support d'un véhicule selon l'une quelconque des revendications 1 et 2, dans lequel le membre de support creux est fabriqué en acier.

4. Châssis de support d'un véhicule selon l'une quelconque des revendications précédentes, dans lequel le châssis de support comprend une pluralité de formations de support (16) destinées à porter la surface de support sur le membre de support.

5. Châssis de support d'un véhicule selon la revendication 4, dans lequel chacune des formations de support définit une surface sous forme globale d'arc pour s'engrener avec une surface extérieure du membre de support et une surface globalement plane (18) à une extrémité opérationnellement supérieure de celle-ci pour porter la surface de support.

6. Châssis de support d'un véhicule selon l'une quelconque des revendications précédentes, dans lequel le membre de support creux est segmenté à l'intérieur pour définir une pluralité de compartiments de chargement séparés pour les charger d'une ou de plusieurs substances fluides.

7. Châssis de support d'un véhicule selon l'une quelconque des revendications précédentes, dans lequel le membre de support comporte un moyen de renforcement intérieur disposé entre ses surfaces intérieures et opérationnellement supérieure et inférieure pour améliorer la stabilité structurelle du membre de support en utilisation.

8. Châssis de support d'un véhicule selon la revendication 7, dans lequel le moyen de renforcement comprend un élément de plaque (24) disposé longitudinalement, qui s'étend le long de la longueur du membre de support.

9. Châssis de support d'un véhicule selon l'une quelconque des revendications précédentes, dans lequel le membre de support est effilé à une de ses extrémités pour définir une formation de montage (20) pour monter le châssis de support sur un véhicule remorqueur.

10. Châssis de support d'un véhicule selon l'une quelconque des revendications précédentes, dans lequel la surface de support comprend un pont plat du type utilisé pour porter une charge à transporter.
